# EUROPEAN PATENT APPLICATION

(11) **EP 4 068 539 A1**
(43) Date of publication of application: **05.10.2022**
(21) Application number: 22165780.2
(22) Date of filing: 31.03.2022
(51) Int. Cl.: H02G 3/32, F16L 3/04, F16L 3/123

(54) **CABLE CLIP**

(30) Priority: 01.04.2021 NL 2027909
(71) Applicant: Siepermann, Erik Daniël, 3911 JP Rhenen (NL)
(72) Inventor: Siepermann, Erik Daniël, 3911 JP Rhenen (NL)
(74) Representative: de Hoog, Johannes Hendrik

(57) **Abstract**

The invention relates to a cable clip (100) for insertion in a gap between a skirting board (600) or the like and a wall, floor or ceiling (8). The cable clip is in the form of a curved resilient strip and comprises a first substantially planar end section (102), a second substantially planar end section (104), and a curved lockup section (106) formed to embrace at least one cable. In a tension-free state the first substantially planar end section and second substantially planer end section are at distance from each other to form a passage to enable positioning of a cable in the curved lock-up section. By bringing the planar end sections together, tension is built up in the curved lockup section giving a retaining force after installation of the first substantially planar end section and the second substantially planar end section in the gap.

## Description

### TECHNICAL FIELD

The invention relates to a cable clip for insertion in a gap between a skirting board or the like and a wall, floor or ceiling.

### BACKGROUND

To keep cables of different kinds tidy and in place it is common to attach the cables to skirting boards or the like by means of some kind of clip, normally nailed to the skirting board. By means of the cable clips, cables for , computers, telephones, television, radio, lighting etc. may be attached to a skirting board or the like, to keep the cables close to a wall. The most common cable clips have a nail or pin that is to be hammered down into the skirting board. The nails or the like will leave marks on the skirting board if the cable is removed in a later stage. The pins are quite small and it may be tricky to hammer them down, without leaving marks of the hammer on the skirting board or the wall. Thus, there is a need for cable clips that are easy to install and that may be installed and removed without leaving any marks on the skirting board or the wall.

WO2006/065207A1 discloses a cable clip for attaching cables to a skirting board or the like. The cable clip has a head with a recess to receive a cable. Furthermore, the cable clip has a relatively thin insert part with a bevelled, pointed and/or rounded lower end for insertion between the skirting board and a wall. Each cable clip has one or more flexible parts giving a retaining force when installed.

EP0097632 discloses fastening device for insertion into a hole in a support member has an axially straight shank and an axially straight barb connected with the shank through a minor radius, such that the barb and shank can move into closely adjacent parallelism with each other when the fastener is inserted into a hole and the barb is in a flexed and stressed condition.

EP3046195A1 discloses a clamp having a clamp body. The clamp body holding a cable. A medium (31A) is provided inside the clamp body (32) to absorb electromagnetic wave conducted through the cable (27).

EP1445499A1 discloses a mounting body for attachment to a bolt body. The mounting body comprises a mounting portion having an engagement portion provided with an engagement projection engaging with an outer thread of the bolt body, an opening portion moving forward the bolt body into the engagement portion, and adjacent portions arranged in a leading end side of the engagement portion.

### SUMMARY

It is an object of the invention to provide an alternative cable clip with improved structure. The alternative cable clip comprises at least one of the following advantages: easy to use, easy to remove without damaging the skirting board, low production costs.

According to the invention, this object is achieved by a cable clip having the features of Claim 1. Advantageous embodiments and further ways of carrying out the invention may be attained by the measures mentioned in the dependent claims.

According to an aspect of the invention, there is provided a cable clip for insertion in a gap between a skirting board or the like and a wall, floor or ceiling. The cable clip is in the form of a curved resilient strip comprising a first substantially planar end section, a second substantially planar end section, and a curved lockup section formed to embrace at least one cable. In a tension-free state the first substantially planar end section and second substantially planer end section are at distance from each other to form a passage to enable positioning of a cable in the curved lock-up section. In placement state, the first substantially planar end section and the second planar end section are brought together and parallel to each other and tension is built up in the curved lockup section giving a retaining force after installation of the first substantially planar end section and the second substantially planar end section in the gap. These features provide a structure which allows one to position easily the cable in the curved lock-up section of cable clip. When installing a cable in the gap, the curved lock-up section is put under tension by bringing the first planar end section and the second planar end section together and the space in the curved lock-up section is decreased. When the cable clip is designed for a cable with defined diameter, in tension free state, the cable clip can move freely along the cable position in the curved lock-up section. In installed state, the cable is clamped in the curved lockup section. As a result, the cable is fixed in the cable clip and the tension force in the curved lock-up section acting on the first and second substantially planar end section give a retaining force comprising the frictional force between the first substantially planar end section and a first side of the gap, being for example the floor below the skirting board, and the frictional force between the second substantially planar end section and the opposite second side of the gap, the lower side of the skirting board.

In an embodiment, a short bend couples the curved lockup section to the second planar end section. In placement state rotation tension is build up in the bend to hinge the second planar end section relative to the curved lockup section and first planar end section. Many skirting boards have an angled underside, widening the space between the floor and the skirting board from front to back. This feature ensures that the cable clip is more securely fastened in the gap.

In an embodiment, the curved lockup section comprises at least one bead forming a ridge along its curvature at an inner side of the curved lockup section. The ridge is an elevation on the inside of the curved lockup section. The ridge with a rounded surface now provides the clamping force on a cable placed in the cable clip. The outer edges of the curved lockup section do not need to exert any force on the cable to keep it in position. This reduces the risk of damage to the relatively soft material on an outer sheath of a cable clamped in the cable clip when the cable is moved lengthwise through the cable clip.

In an embodiment, the curved lockup section comprises a cable clamping member. This feature ensures that a cable with a circumference smaller than the inner circumference of the curved lockup section can be secured in the curved lockup section after installation of the clip in the gap.

In a further embodiment, the cable clamping member is formed by an U-shaped slit in the curved lockup section. This feature provides a cable clamping member that can be made in cost effective way a metal working process, such as stamping or punching.

In a further embodiment, the cable clamping member comprises a length and a width and ends of the U-shaped slit are at a distance from each other that is smaller than the width of the cable clamping member. This feature makes it possible to secure the cable in the curved lockup section without significantly altering the retaining force.

In a further embodiment, the clamping member comprises a bead forming a ridge along its curvature at an inner side of the curved lockup section. The ridge allows the springy strip-like material of the clamping member during the roll bending process to obtain a similar curvature as adjacent parts of the curved lockup section. Without ridge the clamping member may be less curved by the roll bending process than the adjacent parts. In that case, the clamping member cannot be pushed down to clamp a cable in the cable clamp. Furthermore, the ridge reduces the risk of damage to the cable as described above.

In an embodiment, the first planar end section comprises a first leg and a second leg and a space between the first leg and the second leg define an area to receive the second planar end section when bringing the cable clip in placement state such that the first leg, the second leg and second planar end section are in the same plane. This feature provides a solution to position the cable clip in a narrower gap. This further increases the applicability of the cable clip.

In an embodiment, the resilient strip of the cable clip is obtained by a punching process. Punching is an low-cost and fast process to make the strip without too much material loss.

In an embodiment, the material of the cable clip is Stainless Steel 301 and the resilient strip has a thickness of 0,2±0,025 mm. This feature enables one to bring the cable clip in placement state with a finger while the tension build up in the cable clip is sufficient to provide the desired retaining force.

### BRIEF DESCRIPTION OF THE DRAWINGS

These and other aspects, properties and advantages will be explained hereinafter based on the following description with reference to the drawings, wherein like reference numerals denote like or comparable parts, and in which:
Fig. 1 illustrates a perspective view of a first embodiment of a cable clip;
Fig. 2 illustrates side view of the first embodiment of the cable clip;
Fig. 3 illustrates top view of the first embodiment of the cable clip;
Fig. 4 illustrates a strip of material of which the first embodiment is made in unbent form;
Fig. 5A illustrates a side view of a second embodiment of the cable clip in placement state;
Fig. 5B illustrates a side view of the second embodiment of the cable clip in installed state;
Fig 6 illustrates a perspective view of a cable clip in installed state;
Fig. 7 illustrates a cross section of another application of the cable clip;
Fig. 8 illustrates a strip of material of which a third embodiment of a cable clip is made in unbent form;
Fig. 9 illustrates a perspective view of the third embodiment;
Fig. 10 illustrates a perspective view of a second embodiment of a cable clip;
Fig. 11 illustrates top view of the second embodiment of the cable clip; and,
Fig. 12 illustrates cross sectional view of the second embodiment of the cable clip.

### DETAILED DESCRIPTION

When used in this description the expressions "horizontal", "vertical", "upper", "lower" and similar expressions refer to directions in normal use of the a cable clip.

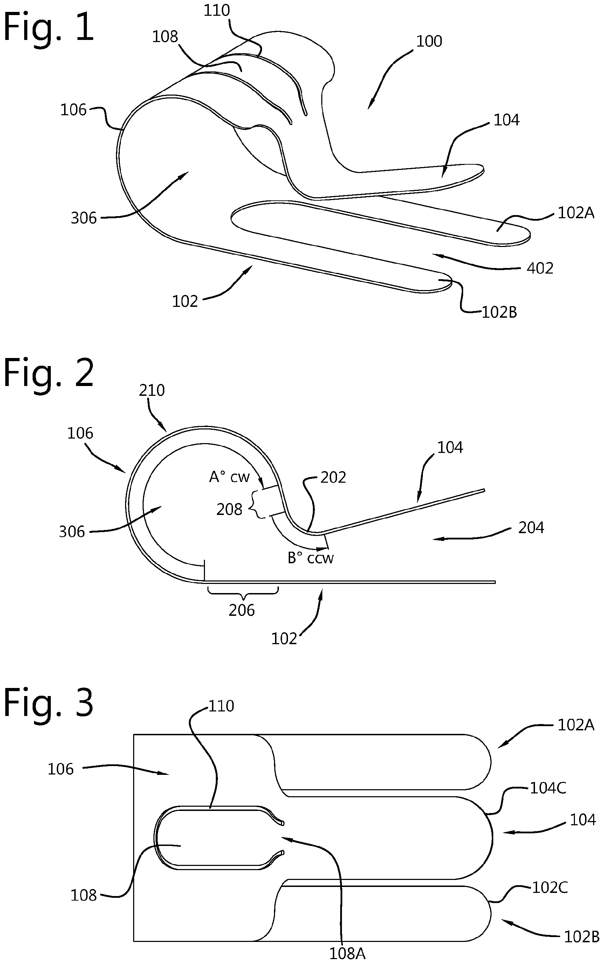

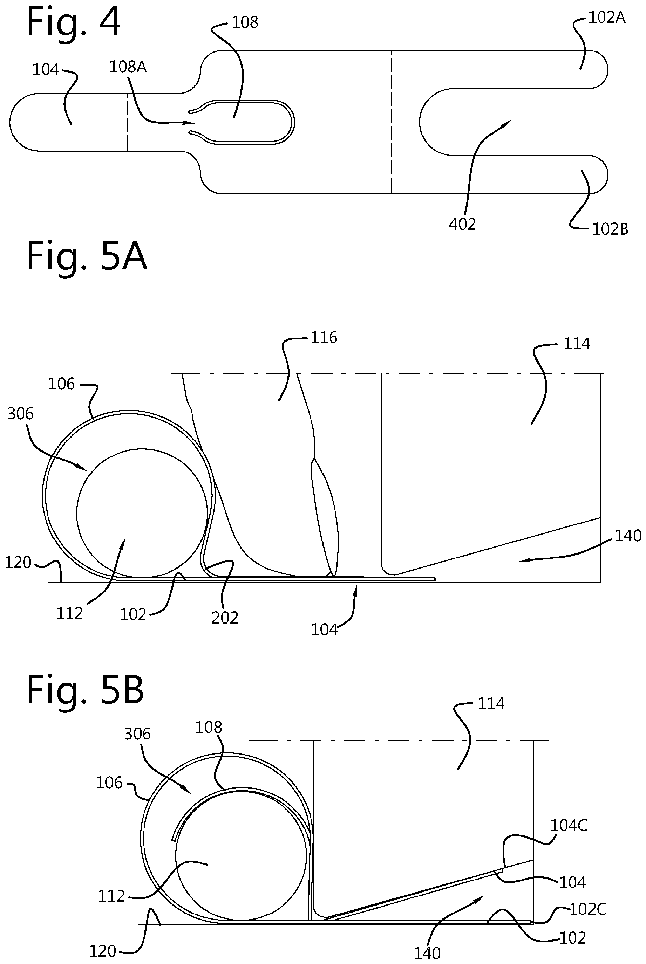

Fig. 1 illustrates a perspective view of a first embodiment of a cable clip 100. The cable clip 100 is configured for insertion in a gap between a skirting board or the like and a wall, floor or ceiling to keep a cable or the like close to the skirting board or the like. The cable clip may also be used in a gap between the ceiling and a beam along the ceiling to keep a cable along the ceiling. The cable clip is in the form of a curved resilient strip. Fig. 4 illustrates the shape of a flat, unbent strip of material that is consumed to make the first embodiment of the cable clip. A strip of Stainless Steel 301 with a thickness of 0,2±0,025 mm has been found suitable to provide a cable clip that is flexible enough to be bent with a fingertip and when applied in a gap there is sufficient tension built up to clamp the cable into the gap. Stainless Steel 301 is particularly well suited for the manufacture of high strength room temperature springs. When using a tool, e.g. a flat-blade screwdriver, a strip of Stainless Steel with a thickness of 0,3±0,025 mm can be used. Other stainless steel grades, such as Stainless Steel 304, may be used. This will have influence on the properties of the cable clip, such as springiness, bendability, firmness and durability.

The cable clip 100 comprises a first substantially planar end section 102, a second substantially planar end section 104, and a curved lockup section 106 formed to embrace at least one cable. The first substantial planar end section 102 comprises a first leg 102A and a second leg 102B placed at a distance from each other. The dimensions of the space between the first leg 102A and the second leg 102B is large enough to position the second substantial planar section 104 between the first leg 102A and the second leg 102B. Figs. 1 - 2 show the cable clip in a tension-free state. The first substantially planar end section and second substantially planar end section are at distance from each other to form a passage 204 to enable positioning of a cable in a space 306 formed by the curved lock-up section 106. A cross section of a cable to be positioned in the space formed by curved lock-up section 106 should be smaller than the space 306 formed by the cable clip when the first substantial planar section 102 and second substantial planar section 104 are pushed against each other or in the same plane. As the passage 204 is narrower than the maximum thickness of a cable, the clamp must be able to be bent open to allow the cable to be placed in the space formed by the curved lock-up section 106. After placement of the cable, the cable clamp will spring back to the tension-free state.

The curved lockup section 106, comprises a first flat section 206, a second flat section 208, and a shaped section 210 between the first flat section 206 and the second flat section 208. The first flat section 206 is in the same plane as the first planar end section 102. Planes of the second flat section 208 and the second planer end section 104 are at an angle of about 90 degrees. Seen from aside, the shaped section 210 has a circular shape over an angle of about 250 degrees of a circle. In installed state, the second flat section 208 is abutting the surface of the skirting board.

Fig. 5A illustrates a side view of a second embodiment of the cable clip in placement state. In placement state, the first substantially planar end section and the second planar end section are brought together and parallel to each other and tension is built up in the curved lockup section. The build-up tension forces the first planar section 102 and second planar section 104 to move away from each other and provides a retaining force after installation of the first substantially planar end section and the second substantially planar end section in the gap.

The part of the strip forming the curved lockup section 106 comprises a cable clamping member 108. The cable clamping member allows a cable with a diameter smaller diameter than the maximal diameter to be fixed in the cable clip, such that the cable cannot be moved in axial direction of the cable in the cable clip. The cable clamping member 108 is formed by an U-shaped slit 110 in part of the strip forming the curved lockup section. The open end of the U-shape is directed to the second planar section 104 along the strip from which the cable clip is made. The cable clamping member 108 comprises a length and a width and ends of the U-shaped slit 110 are at a distance from each other that is smaller than the width of the cable clamping member. As a result, material of the area 108A between the ends of the U-shaped slit will be deformed sooner than the other parts of the cable clamping member 108 formed between the U-shaped slit 110 when a force is applied on the cable clamping member 108, the cable clamping member 108 is moved in space 306 of the curved lockup section 106.

A short bend 202 couples the curved lockup section 106 to the second planar end section 104. The direction of the curvature of the short bend 202 is opposite to the direction of the curvature of the curved lockup section 106. In placement state, rotation tension is build up in the bend to hinge the second planar end section 104 relative to the curved lockup section 106 and first planar end section 102. When bringing the cable clip from tension free state in placement state by a fingertip 116, the short bend 202 is moved in the direction of the first planar section 102. In an embodiment, the second planar section 102 and the second planar section 104 are parallel to each other when the short bend 202 touches the plane of the first planar section 102. In this embodiment, the angle of the short bend 202 is about 90°.

In an alternative embodiment, the angle of the short bend is less than 90°, for example in a range of 60° - 85°. In this embodiment when the cable clip is moved into the placement state, first, the short bend 202 touches the plane of the first planar section 102. At that moment, the free end 104A of the second planar section 104 is at distance from the plane of the first planar section 102 and the plane of the second planar section 104 is at an angle of the plane of the first planar section 102. Subsequently, the second planar section 104 is moved to be parallel to the first planar section 102 by an additional force of the fingertip 116. This is shown in fig 5A. This additional force increases the tension in the short bend 202. When the cable clip is in placement state, the free ends of both the first planar section 102 and the second planar section 104 can be positioned in the gap between floor 120 and skirting board 114. As shown in Fig. 5B, when the second planar section is fully inserted into the gap 140 to become in the installed state, the tension force in the short bend causes the second planar section 104 to tilt relative to the first planar section 102. The tension force in the short bend 202 pushes the second planar section 104 against the underside of the skirting board 114. When the underside of the skirting board is slanted such that the gap widens from the entrance of the gap to the end of the gap, tilting of the second planar end section 104 improves clamping of the cable clip in the gap.

The first planar end section 102 comprises a first leg 102A and a second leg 102B. A space 402 between the first leg and the second leg defines an area to receive the second planar end section 104 when bringing the cable clip in placement state such that the first leg, the second leg and second planar end section are in the same plane. Fig. 3 illustrates a top view of the cable clip and makes clear that the second planar end section 104 can be positioned between the first and second leg. Fig 5a illustrates the advantage of the space 402. The space 402 allows the cable clip to be placed in a gap with a width of at least the thickness of the strip from which the cable clip is made.

Fig. 4 shows that an end of the strip forming the space 402 between the first leg 102A and the second leg 102B is complement to the opposite end of the strip forming at least the second planar end section 104. This allows a punching process to manufacture cable clips from a long strip of resilient material with minimal material waste.

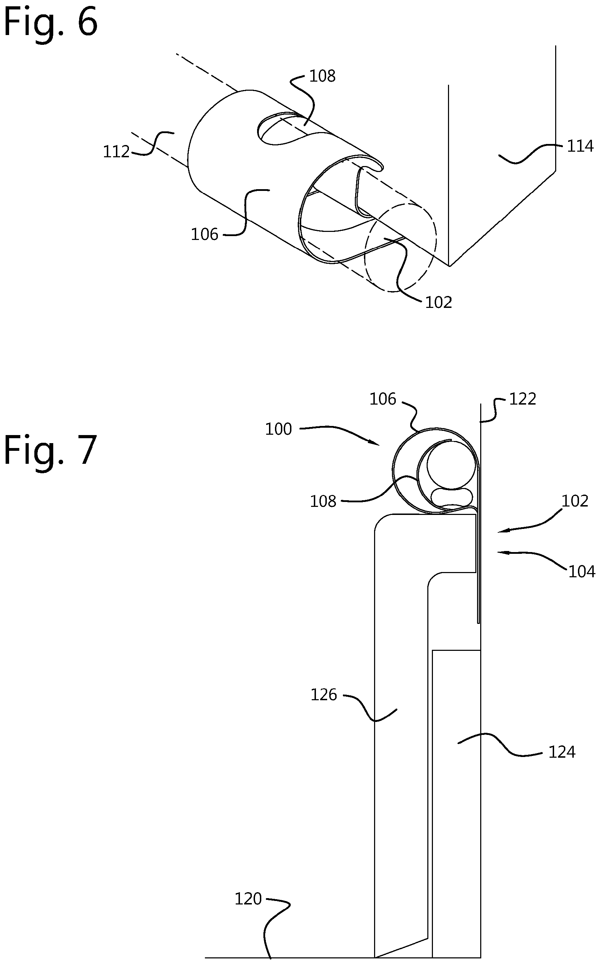

Fig. 5B shows further that the cable clamping member after it is pushed down to clamp the cable 112 in the space 306 formed by the curved lockup section 106. Fig 6 illustrates a perspective view of a cable clip in installed state. The dashed lines indicate a cable 112. As a result the cable 112 is held in place along the skirting board 114 and floor 120.

Fig. 7 illustrates a cross section of another application of the cable clip 100. In this application the planar end sections 102, 104 are placed in a gap between a cover skirting board 126 and a wall surface 122. It will be clear that the cable clamp can be used in any gap that has sufficient depth and width to completely receive the second planar end section 104. An example is a gap between a ceiling and a beam on which the ceiling rests.

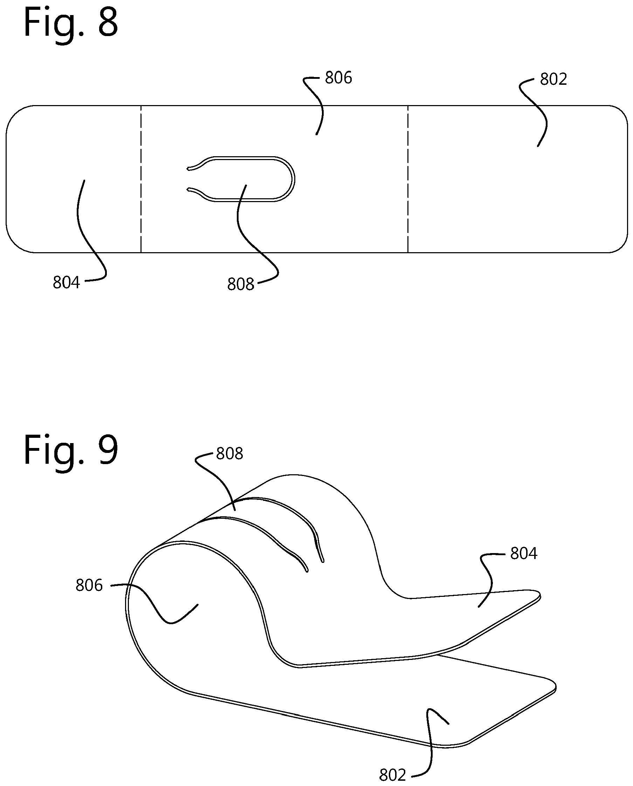

Figs. 8 and 9 illustrate a third embodiment of a cable clip. Fig. 8 shows a strip of material from which the third embodiment of a cable clamp is made in an unbent form. In this embodiment, the first planar end section 802 and the second planar end section 804 have the same width. Furthermore, the strip of material comprises a part to form the curved lockup section 806 between the first planar end section and second planar end section which includes the cable clamping member 808. The dashed lines indicate the position of the area forming the transition from the first planar end section 802 and curved lockup section 806 and area forming the transition from the curved lockup section 806 and second planar end section 804. Fig. 9 illustrates a perspective view of the third embodiment. To apply this embodiment, the width of a gap must be at least the thickness of the first planar section and second planar section together.

The cable clip can be made by bending a first section of a strip of resilient material counter-clockwise through 90 degrees or more, indicated in Fig. 2 by B°ccw, to form the short bend 202 and bending a second section of the strip through about 255 degree, indicated in Fig. 2 by A° cw, to form the space 306 within the curved lockup section 106. Bending of the short bend provides a first pivot point for the second planar end section at a first distance from the free end of the second planar end section and bending of the curved lockup section provides a second pivot point for the second planar end section at a second distance from the free end of the second planar end section. The radius of the short bend 202 may be in a range of 1,5 - 3 mm. The radius of the curved lockup section 106 depends on the dimensions of the cables the cable clip has to secure. A radius in the range of 4 - 7 mm has been found suitable for securing one or more cables. The first pivot point is located near the short bend and the second pivot point is near the end of the first planar end section which forms the transition to the curved lockup section. In the state to insert the first and second substantial planar end sections 102, 104 in gap, the free ends of the first end second substantial planar end section 102, 104 preferably coincide. The length of the second substantially planar end section 104 should be shorter than the depth of the gap in which the planar end section has to be inserted. When inserted in a gap below a skirting board, the length have to be less than the thickness of the skirting board.

It will be apparent to the person skilled in the art that by using a strip like material with spring characteristics for the cable clip, when removing the cable clip out of the gap, the passage 204 between the first substantial planar section 102 and the second substantial planar section 104 will be formed again by releasing the tension build-up in the curved lock-up section 106. The cable clip will return from its installed state to its original tension free state. This allows for multiple reuse of the cable clip.

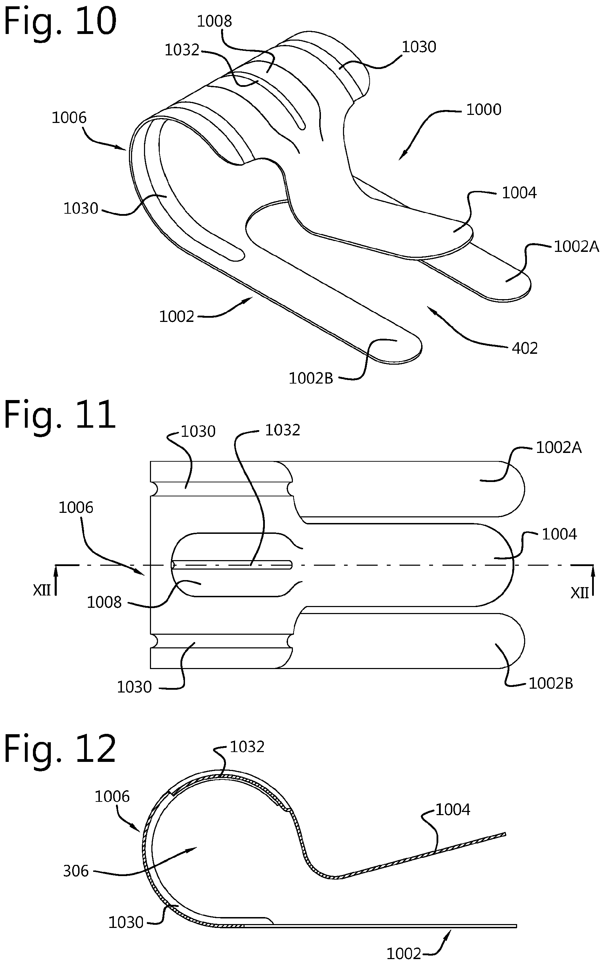

Figs 10 -12 illustrate a second embodiment 1000 of a cable clip. The second embodiment 1000 comprises a first substantially planar end section 1002, a second substantially planar end section 1004, and a curved lockup section 1006 formed to accommodate at least one cable. The first substantial planar end section 1002 comprises a first leg 1002A and a second leg 1002B placed at a distance from each other. The dimensions of the space between the first leg 1002A and the second leg 1002B is large enough to position the second substantial planar section 1004 between the first leg 1002A and the second leg 1002B. The cable clip 1000 may be may by a roll bending process. The curved lockup section 1006 comprises at the left and right side of the cable clamping member 1008 a bead 1030 forming a ridge along its curvature and at an inner side of the curved lockup section. The ridge reduces the space 306 within the curved lockup section. The ridge is an elevation on the inside of the curved lockup section. The ridge with a rounded surface now provides the clamping force on a cable placed in the cable clip. The outer edges of the curved lockup section do not need to exert any force on the cable to keep it in position. This reduces the risk of damage to the relatively soft material on an outer sheath of a cable clamped in the cable clip when the cable is moved lengthwise through the cable clip. The ridges improve the clamp characteristics with regard to sliding of a cable in longitudinal direction through the cable clip, when a cable is used having a maximal diameter for which the cable clip is designed. The ridges further improve the dimensional stability and springiness of the cable clip.

Furthermore, cable clamping member 1008 comprises a bead forming 1032 a ridge on the inside of the curved lockup section 1006. Since the cable clip is formed from a strip of resilient material with spring-like properties, the material has to be deformed during a roll bending process with a force greater than the spring force in the material. This will cause the material to spring back slightly when leaving the roll bending machine. When the cable clamping member 1008 springs back more than the neighbouring parts of the curved lockup section, the cable clamping member will protrude outwards. As a result, the cable clamping member can no longer be easily pushed down through its opening in the curved lock-up section. Applying the bead in the cable clamping member reduces the spring back and prevents the cable clamping member from protruding outward the curved lockup section 1006. The ridge further reduces the risk of damaging a cable clamped in the cable clip when the cable is moved lengthwise through the cable clip as described before. Figure 12 shows a cross-sectional view along line XII - XII in Figure 11. De dimensions of the beads 1030, 1032 are clearly shown. The length of the beads are preferably over the full length of the curvature. However, this is not essential in order to provide the advantages.

It will be obvious to the skilled person that when the cable clip does not have a cable clamping member 1008, only one bead forming a ridge at the inside of the curved lockup section may be suitable to improve the dimensional stability and springiness of the cable clip.

In the embodiments described above the curved lockup section comprises a cylindrical shape. However, any shape can be used, some examples are squared, elliptical and triangular.

It is possible that there are plastic materials that have similar flexible properties as Stainless Steel 301 with a thickness of 0,2±0,025 mm without deforming or breaking the cable clip during use. A cable clip can be made of such a plastic material.

While the invention has been described in terms of several embodiments, it is contemplated that alternatives, modifications, permutations and equivalents thereof will become apparent to those skilled in the art upon reading the specification and upon study of the drawings. The invention is not limited to the illustrated embodiments. Changes can be made without departing from the scope of the appended claims.

## Claims

1. A cable clip (100) for insertion in a gap between a skirting board (600) or the like and a wall, floor or ceiling (8), **characterized in that** the cable clip being in the form of a curved resilient strip, the cable clip comprising a first substantially planar end section (102), a second substantially planar end section (104), and a curved lockup section (106) formed to embrace at least one cable, wherein in a tension-free state the first substantially planar end section and second substantially planer end section are at distance from each other to form a passage to enable positioning of a cable in the curved lock-up section, in placement state the first substantially planar end section and the second planar end section are brought together and parallel to each other and tension is built up in the curved lockup section giving a retaining force after installation of the first substantially planar end section and the second substantially planar end section in the gap.

2. The cable clip (100) according to claim 1, wherein a short bend (202) couples the curved lockup section (106) to the second planar end section (104), in placement state rotation tension is build up in the bend to hinge the second planar end section (104) relative to the curved lockup section (106) and first planar end section (102).

3. The cable clip (1000) according to any of the claims 1 - 2, wherein the curved lockup section (1006) comprises at least one bead (1030) forming a ridge along its curvature and at an inner side of the curved lockup section.

4. The cable clip according to any of the claims 1 - 3, wherein the curved lockup section (106) comprises a cable clamping member (108).

5. The cable clip (100) according to claim 4, wherein the cable clamping member (108) is formed by an U-shaped slit (110) in the curved lockup section.

6. The cable clip (100) according to claim 5, wherein the cable clamping member (108) comprises a length and a width and ends of the U-shaped slit (110) are at a distance from each other that is smaller than the width of the cable clamping member.

7. The cable clip (1000) according to any of the claims 4 - 6, wherein the clamping member (1008) comprises a bead (1030) forming a ridge along its curvature and at an inner side of the curved lockup section.

8. The cable clip (100) according to any of the claims 1 - 7, wherein the first planar end section (102) comprises a first leg (102A) and a second leg (102B) and a space between the first leg and the second leg define an area to receive the second planar end section (104) when bringing the cable clip in placement state such that the first leg, the second leg and second planar end section are in the same plane.

9. The cable clip (100) according to claim 8, wherein an end of the strip forming the space between the first leg and the second leg is complement to the opposite end of the strip forming at least the second planar end section.

10. The cable clip (100) according to any of the claims 1 - 9, wherein the resilient strip of the cable clip is obtained by a punching process.

11. The cable clip (100) according to any of the claims 1 - 10, wherein the material of the cable clip is Stainless steel 301 and the resilient strip has a thickness of 0,2±0,025 mm.
